# EUROPEAN PATENT APPLICATION

(11) **EP 2 447 177 A1**
(43) Date of publication of application: **02.05.2012**
(21) Application number: 11186630.7
(22) Date of filing: 26.10.2011
(51) Int. Cl.: B65D 30/00, B65D 33/00, B65D 81/00

(54) **Anti-static packaging bag for liquid crystal module and liquid crystal module packaging method**

(30) Priority: 29.10.2010 JP 2010243426; 25.08.2011 JP 2011183341
(71) Applicant: Mitsubishi Plastics, Inc., Tokyo 103-0021 (JP)
(72) Inventor: Fujimoto, Shinichiro, Tokyo,, Tokyo 103-0021 (JP); Otomura, Yukiaki, Nagahama-shi,, Shiga 526-0243 (JP)
(74) Representative: Gille Hrabal

(57) **Abstract**

To prevent a surface-protecting cover material and a display screen of a liquid crystal module from coming into close contact and allowing a liquid crystal module to be packaged all the more readily.

Proposed is an anti-static packaging bag for liquid crystal module, which is a bag constituted from a front film portion and a back film portion and having an open portion and a closed portion, at least the front film portion containing an anti-static agent and at least the inner surface that is to be the inside of the bag being an irregular surface.

## Description

### [Technical field]

The present invention relates to an anti-static packaging bag used for packaging a liquid crystal module of a personal computer, a television or the like, and to a liquid crystal module packaging method.

### [Technical background]

In order to prevent scratches, spots or attachments of foreign matter, dust, or the like, when shipped from a factory, a liquid crystal module of a personal computer, a television or the like, is shipped with the display screen covered by a surface-protecting cover material, the entire liquid crystal module being further housed in a plastic film bag, and this being immobilized by a protective material made of Styrofoam, cardboard, or the like, and boxed.

The main role of the surface-protecting cover material is to prevent a foreign matter, dust, or the like, from attaching to the display screen while preventing scratches from being inflicted to the display screen. However, there is the problem that, due to changes in the temperature condition and humidity condition during transport or storage, the display screen becomes dewed, which brings the display screen and the surface-protecting cover material into close contact, and, with water vapor building up in this close contact portion, stays in a wet state, resulting in optical color alteration, or the like, occurring on the display screen.

Thus, proposed in prior art was to use a surface-protecting cover material comprising a polymer film with excellent moisture permeability to reduce the difference in the degree of moisture absorption between the close contact portion and the non-close contact portion of the polarizer surface thereby solving such problems as those described above (refer to Patent Document 1).

In addition, proposed also was to perform a predetermined irregularization processing on the surface of the surface-protecting cover material to prevent the close contact between the surface of the display portion and the protecting cover material thereby solving such problems as those described above (refer to Patent Document 2).

### [Prior art references]

### [Patent Documents]

[Patent Document 1] Japanese Patent Application Laid-open No. 2001-209039
[Patent Document 2] WO2005/013245

### [Summary of the invention]

### [Problems to be solved by the invention]

The present invention proposes a novel liquid crystal module packaging method that can prevent a surface-protecting cover material and the display screen of a liquid crystal module from coming into close contact and, moreover, allows a liquid crystal module to be all the more readily packaged and shipped, and an anti-static packaging bag for liquid crystal module used therefor.

### [Means to solve the problems]

The present invention proposes a liquid crystal module packaging method for packaging a liquid crystal module, which packages a liquid crystal module with an anti-static packaging bag for liquid crystal module without covering the display screen of the liquid crystal module with a surface-protecting cover material, and carries out the packaging so as to bring face-to-face the display screen of the liquid crystal module and the inner surface of the front film portion of the anti-static packaging bag for liquid crystal module.

Further, as an anti-static packaging bag for liquid crystal module used for such packaging method, the present invention proposes an anti-static packaging bag for liquid crystal module, which is a bag constituted from a front film portion and a back film portion and having an open portion and a closed portion, at least the front film portion containing an anti-static agent and at least the inner surface of the front film portion that is to become the inside of the bag being an irregular surface.

### [Effects of the invention]

According to the liquid crystal module packaging method as well as the anti-static packaging bag for liquid crystal module proposed by the present invention, even without covering the display screen with a surface-protecting cover material, housing the liquid crystal module inside the packaging bag can prevent foreign matter, dust, or the like, from attaching to the display screen and at the same time can prevent a scratch from being inflicted to the display screen, moreover, by way of the irregular surface of the front film portion, can prevent the display screen and the surface-protecting cover material from coming into close contact even if the display screen has become dewed due to changes in the temperature condition and humidity condition during transport or storage, allowing the problem of optical color alteration, or the like, occurring on the display screen to be resolved. Thus, it is possible to perform packaging of liquid crystal module more readily and inexpensively.

### [Brief description of the drawings]

[Fig. 1] Cross-sectional view showing an example of the anti-static packaging bag for liquid crystal module of the present invention.
[Fig. 2] Cross-sectional view showing an example of state in which a liquid crystal module has been packaged using an example of the anti-static packaging bag for liquid crystal module of the present invention.

### [Modes for carrying out the invention]

Hereafter, an anti-static packaging bag for liquid crystal module as an example of embodiment of the present invention (hereafter referred to as "the present anti-static bag") will be described. However, the present invention is not to be limited to this present anti-static bag.

### <The present anti-static bag>

The present anti-static bag is a bag constituted from a front film portion and a back film portion and having an open portion and a closed portion.
Since the present anti-static bag is a bag that has an open portion and a closed portion, a liquid crystal module can be housed readily and safely. At such time, the opposing two edges of the film portion may be closed into closed portions and the remaining two edges may be formed as open portions, or, three edges may be closed into closed portions and the remaining one edge may be formed as an open portion. From the point of view of fall prevention or the like, forming the bag in such a way that three edges are closed to turn the three edges into closed portions, and the remaining one edge is open to serve as an open portion, is particularly desirable.
Note that the present anti-static bag may be formed from a film with a front film portion and the back film portion in one sheet or may be formed from two film sheets.

### (Bag)

When forming the present anti-static bag from one film sheet, a bag having an open portion and a closed portion can be obtained by folding one film sheet and fusing overlapping border ends. For instance, fusing two edges among the border ends allows a bag to be obtained, in which one edge is an open portion and three edges are closed portions.
Meanwhile, when forming the present anti-static bag from two film sheets, a bag having an open portion and a closed portion can be obtained by overlapping two film sheets and fusing overlapping border ends. For instance, fusing three edges among the border ends allows a bag to be obtained, in which one edge is an open portion and three edges are closed portions.

When forming the present anti-static bag from two film sheets, the front-side film and the back-side film may be films comprising an identical material or may be films comprising different materials.
When forming a bag by hot-fusing a front-side film and a back-side film, the main component of the front film portion and the main component of the back film portion are preferably polyolefin series resins polymerized mainly from olefin monomers having the same or different numbers of carbons respectively, and particularly preferably polyolefin series resins polymerized mainly from olefin monomers having the same number of carbons.
However, there is not limitation to this.
For instance, when the main component of the front-side film is a polyethylene series resin, it is desirable that the main component of the back-side film is also a polyethylene series resin; in addition, when the main component of the front-side film is a polypropylene series resin, it is desirable that the main component of the back-side film is also a polypropylene series resin.

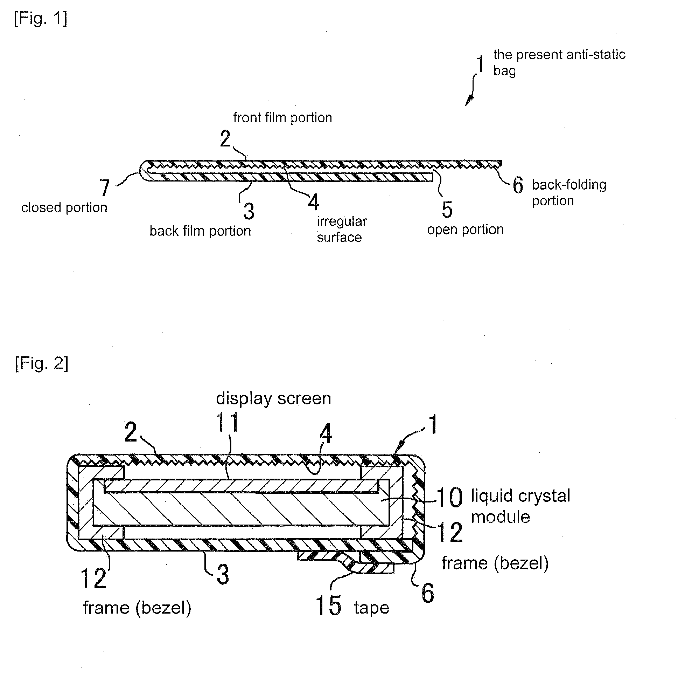

In the present anti-static bag, it is desirable that a back-folding portion 6 is provided, for instance as shown in Fig. 1, with a front film portion 2 being larger than a back film portion 3 and the front film portion 2 protruding outward from an open portion 5 of the bag. If such a back-folding portion 6 is provided, a liquid crystal module 10 can be introduced smoothly into the bag by guiding with this back-folding portion 6, and after the liquid crystal module 10 has been introduced into the bag, the liquid crystal module 10 can be packaged in such a way that no foreign matter, or the like, is introduced into the bag, by folding the back-folding portion 6 over to the side opposite to a display screen 11 and securing it on the external face of the back film portion 3 with a tape 15, as shown in Fig. 2.
However, since similar effects can be obtained even for an aspect in which the back film portion 3 is larger than the front film portion 2, this is favorable.

In the present anti-static bag, the stiffness of a film portion thereof can be evaluated with the measurement value at the maximum stress as measured with a loop stiffness tester.
It is desirable that the value of the front film portion stiffness Sf and the value of the back film portion stiffness Sb are both 80 mN or lower. More desirable is 70 mN or lower, and particularly desirable is 60 mN or lower.
Normally, after the liquid crystal module is housed, the open portion is folded back and the packaging bag is boxed. If the stiffness exceeds 80 mN, not only does the folding back workability decrease, but since deformation that follows the shape of the module is small, boxing workability and housing ability decrease.
On the other hand, although the lower limit value of the stiffness is not limited in particular, from the points of view of handleability and firmness necessary as a bag when handled, it suffices that the value of the front film portion stiffness Sf and the value of the back film portion stiffness Sb are both preferably 1 mN or greater, more preferably 3 mN or greater and particularly preferably 5 mN or greater.

In addition, with a back film portion that is soft, when a liquid crystal module is housed inside the bag, the back film portion deforms flexibly following the shape of the liquid crystal module thereby allowing the front film portion to be placed in a state that follows the display screen. Meanwhile, with a front film portion that is stiff, not only can the role of protecting the display screen be achieved, but the front film portion can be placed readily in a state that follows the display screen.
From this, the relationship between the value of the front film portion stiffness Sf and the value of the back film portion stiffness Sb is preferably Sf ≧ Sb, of which Sf > Sb is more desirable.

### (Front film portion)

In the present anti-static bag, it is important that the front film portion contains an anti-static agent and that the inner surface that is to be on the inside of the bag is an irregular surface.

While it suffices for the front film portion that the inner surface that is to be on the inside of the bag is an irregular surface, it is all the more desirable that the inner surface that is to be on the inside of the bag and the outer surface that is to be on the outside of the bag are irregular surfaces. For instance, in the event the back film portion has been folded back and taped, if the outer surface is an irregular surface, the tape can be peeled readily.

The extent of irregularity of the irregular surfaces can be adjusted suitably, and concretely, a range of 2.0 µm to 40.0 µm in terms of 10-point mean roughness is desirable. More desirable is 2.0 µm to 35.0 µm and particularly desirable is 2.0 µm to 30.0 µm.
Note that the 10-point mean roughness is a value as measured according to JIS B0601 (defined in the 1994 version of JIS).
If the 10-point mean roughness is 2.0 µm or greater, in distribution or storage under high-temperature/high-humidity conditions, it is possible to prevent effectively the display screen and the present anti-static bag from coming into close contact and, with water vapor building up therein, being in a wet state. Meanwhile, if the 10-point mean roughness is 40.0 µm or less, not only can visibility be secured sufficiently, but the irregularity of the irregular surfaces does not become thinned down with the display screen and the present anti-static bag rubbing against each other.

Methods for forming an irregular surface may use a well known method suitably; for instance, the method of mixing an inorganic filler or a rubber constituent so that the film *per se* possesses microscopic irregularity, or the like, can be cited. Elsewhere, the method of pressing a rubber roll or a metallic roll having such surface roughness in the forming process for the film to transfer irregular shapes, the method of roughening the surface by corona treatment or the like, and the others, can be cited.

As means for including an anti-static agent in the front film portion, well known means can be adopted, for instance, kneading an anti-static agent into the film, layering on the film surface by co-extrusion or the like a resin layer having an anti-static agent kneaded into, coating the film surface with an anti-static agent, and the like.

As the type of anti-static agent, there is no limitation as long as it can be added to a polymer material. For instance, various surfactants such as of cationic type, anionic type and non-ionic type, anti-static coatings having urethane, acrylic, polyester, or the like, as binder, permanent anti-static agents comprising a hydrophilic polymer alloyed with an acrylic resin or the like, conductive fillers that use carbon black, graphite or metal oxides such as zinc oxide, tin oxide or the like, can be used.
Among these, from the points of view of transparency, bleed out prevention, anti-static ability, and the like, combining a (poly)glycerin fatty acid ester and an alkyl sulfonate for use is particularly desirable.

The front film portion can be formed from a monolayer film or may be formed from a layered film provided with an outer surface layer, a middle layer and an inner surface layer.

When forming the front film portion from a monolayer film, as the main component resin thereof, for instance, polyolefin series resins such as polyethylene series resins and polypropylene series resins, polystyrene series resins, polyethylene terephthalate resins, polyvinyl alcohol resins, polyvinyl chloride resins, nylon resins, cellulose series resins, polyacrylonitrile resins, polymethacrylic acid series resins, and the like, may be cited. Among them, polyolefin series resins, in particular polyethylene series resins and polypropylene series resins are favorable.

As the polyethylene series resins, resins that have been polymerized mainly from ethylene monomers are adequate, and, in addition to high density polyethylene, medium density polyethylene, low density polyethylene and linear low density polyethylene, ethylene-vinyl acetate copolymers, ethylene-vinyl alcohol copolymers, ethylene-methylacrylate copolymers, ethylene-ethylacrylate copolymers, ethylene-methyl(meth)acrylate copolymers, and the like, can be indicated as examples. Among them, from the point of view of softness, low density polyethylene, linear low density polyethylene, ethylene-vinyl alcohol copolymers, and the like, are favorable.

As the polypropylene series resin, resins that have been polymerized mainly from propylene monomers are adequate, and, homopolypropylene, propylene block copolymers, propylene random copolymers, and the like, can be indicated as examples. Among them, from the point of view of softness, propylene random copolymers are favorable, and including ethylene, butene, pentene, hexene, or the like, as copolymerization monomers thereof, is favorable.

When forming the front film portion from a layered film provided with an outer surface layer, a middle layer and an inner surface layer, it is desirable that the outer surface layer and the inner surface layer are relatively soft for the purpose of scratch prevention of the display screen, and it is desirable that the middle layer is relatively stiff for the purpose of handleability and display screen protection.
In addition, owing to the fact that the interlayer adhesive strength of the outer surface layer and the inner surface layer with the middle layer become satisfactory, it is desirable that each layer is constituted from similar resins as the main component.
From such points of view, as a concrete example, all the main components from each of the layers are preferably polyolefin series resins polymerized mainly from olefin monomers having the same numbers of carbons, and particularly preferably among them, polypropylene series resins.
In addition, including an anti-static agent in at least the inner surface layer is desirable.

As a more concrete example of layered film constituting the front film portion, a constitution example can be cited, in which the outer surface layer, the middle layer and the inner surface layer all comprise as the main component a propylene random copolymer containing ethylene as the copolymerization monomer, in the outer surface layer and the inner surface layer, the ethylene content in the propylene random copolymer being 2 to 15 mol% and an anti-static agent being included from the point of view of rendering them relatively soft, and in the middle layer, the ethylene content in the propylene random copolymer being 0 to 5 mol% from the point of view of rendering it relatively stiff.

From such points of view as the role of protecting the display screen of the liquid crystal module from scratches or the like, and ease of handling, it is desirable to design the thickness of the front film portion suitably in the range of 50 µm to 100 µm.
In addition, when the front film portion is a layered film provided with an outer surface layer, a middle layer and an inner surface layer, it is desirable that there is 5 µm or more thickness of the inner surface layer for anti-static and display screen scratch prevention purposes.

The front film portion may, as necessary, further contain a coloring agent, an anti-fogging agent, an ultraviolet light absorbent, light-resistant stabilizer and the like, in ranges that do not impede the properties of the present anti-static bag.

### (Back film portion)

As described above, the back film portion may be formed from an identical film to the above front film portion, may also be formed from a different film of an identical material, and may also be formed from a different film of a different material.

When forming from a different film from the above front film portion, the back film portion may contain no anti-static agent, although containing one is desirable. In so doing, the means for conferring anti-static ability, as well as the anti-static agent, and the like, are similar to those of the front film portion.
In addition, the irregular surface described above may be provided, or may not be provided. In so doing, the extent of irregularity or the forming means of the irregular surface is similar to that of the front film portion.

Since it is desirable that the back film portion is relatively soft as described above, for instance, forming from a film having as the main component a polyolefin series resins such as a polyethylene series resin or a polypropylene series resin is particularly favorable.
It is desirable to design the thickness of the back film portion suitably in the range of 50 µm to 100 µm.

The back film portion may contain a coloring agent, an anti-fogging agent, an ultraviolet light absorbent, light-resistant stabilizer and the like, in ranges that do not impede the properties of the present anti-static bag.

### <Packaging method>

Using the present anti-static bag allows a liquid crystal module to be packaged favorably by housing the liquid crystal module in the present anti-static bag without covering the display screen with a surface-protecting cover material, in such a way that the display screen of the liquid crystal module and the irregular surface are face-to-face. That is to say, even without covering the display screen with a surface-protecting cover material, housing in this manner the liquid crystal module inside the present anti-static bag can prevent foreign matter, dust, or the like, from attaching to the display screen and at the same time can prevent a scratch from being inflicted to the display screen, moreover, by way of the irregular surface of the front film portion, can prevent the display screen and the surface-protecting cover material from coming into close contact even if the display screen has become dewed due to changes in the temperature condition and humidity condition during transport or storage, allowing the problem of optical color alteration, or the like, occurring on the display screen to be resolved.

### <Explanation of terms>

In the present invention "liquid crystal module" has meanings that include general electronic devices equipped with a liquid crystal display screen, such as, personal computers, televisions, game consoles, cellular phones, music players for portables, touch panels and units equipped with a liquid crystal panel.
In addition, generally, "film" refers to a thin and flat product with an arbitrarily limited maximum thickness, the thickness being extremely small compared to the length and width, and generally provided in the form of a roll (Japanese Industrial Standards JIS K6900). Meanwhile, in general, "sheet", as defined in JIS, refers to a product that is thin and flat with the thickness thereof being small given the length and the width. However, as the boundary between a sheet and a film is not determined and there is no need in the present invention to distinguish the two by words, in the present invention, "sheet" is deemed included even when referring to "film", and "film" is deemed included even when referring to "sheet".

In the present invention, when the expression "main component" is used, unless expressly noted, it includes the meaning of allowing another component to be contained in a range that does not impede the function of the main component. In so doing, although not to specify the content ratio of the main component in particular, the main component (if two constituents or more are the main components, the total amount thereof) occupies 50% by mass or greater, preferably 70% by mass or greater, and particularly preferably 90% by mass or greater (including 100% by mass) of the composition constituting this layer.
In addition, in the present invention, when the expression "polymerized mainly" is used, unless expressly indicated otherwise, the monomer unit occupies 50% by mass or greater, preferably 70% by mass or greater, and particularly preferably 90% by mass or greater (including 100% by mass) in the resin.

In addition, in the present invention, when the expression "X to Y" (X and Y are arbitrary numbers) is used, unless expressly indicated otherwise, the meaning "X or greater and Y or lower" along with the meanings "preferably greater than X" and "preferably less than Y" are included.
In addition, in the present invention, when the expression "X or greater" (X is an arbitrary number) is used, unless expressly indicated otherwise, the meaning "preferably greater than X" is included, and when the expression "Y or lower" (Y is an arbitrary number) is used, unless expressly indicated otherwise, the meaning "preferably less than Y" is included.

### [Example]

Hereafter, examples will be indicated to describe the present invention more concretely; however the present invention is not to be limited to these, and a variety of applications are possible within extents that do not depart from the technical thoughts of the present invention.
Note that the measurement values and the evaluations shown in the examples were carried out as indicated below.

### <Evaluation method>

### (Surface roughness)

The surface roughness on the outer surface layer side and the inner surface layer side of the film is the value of the 10-point mean roughness measured according to JIS B0601 (defined in the 1994 version of JIS).

### (Stiffness)

Measurement was conducted by using a loop stiffness tester manufactured by Toyo Seiki Seisaku-sho, LTD (model: Type DA), and the measurement value (mN) at maximum stress was evaluated as the stiffness. The size of the test fragment was 15 mm width x 120 mm, 80 mm loop length, the compression rate was 3.3 mm/sec, and the compression amount was 15 mm.

### (Evaluation of dew adhesiveness)

A 12.1-inch liquid crystal module (for notebooks; polarization plate: clear type (smooth type)) was introduced into a packaging bag, up to nearly 50 mm from the open portion being folded back to the side opposite to the screen, and left to lay in a wet heat tester under a 60°C x 85% Rh environment with the screen facing up. After 48 hours have elapsed, this was taken out and evaluated, with a "x (cross)" when the screen (polarization plate) and the bag were in close contact due to dewing and with a "○ (circle)" when the initial state with no close contact at all was maintained.

### (Evaluation of housing workability)

When the liquid crystal module described above was placed into the packaging bag manually, in case the front film portion could be arranged readily into a state that follows the display screen, the evaluation was "○ (circle)", and " x (cross)" otherwise.

### (Evaluation of open portion back-folding workability)

When the liquid crystal module described above was placed into the packaging bag and up to nearly 50 mm from the open portion was folded back manually, the evaluation was " x (cross)" when the back-folded region was angulated with the packaging bag not following flexibly the liquid crystal module, or, due to the film being stiff, an excessive space had formed or the film broke and became permanently deformed, and "○ (circle)" if back-folding could be carried out with no such problems.

### <Film preparation>

### (Film A preparation)

A resin composition comprising 99% by mass of a polypropylene series resin (random copolymerization polypropylene; product name "NOBLEN FS3611" manufactured by Sumitomo Chemical Co., Ltd.) with 1% by mass of a glycerin ester series anti-static agent mixed-into was used as a resin composition forming the outer surface layer and the inner surface layer, and a random copolymerization polypropylene (product name "NOBLEN WF836DG3" manufactured by Sumitomo Chemical Co., Ltd.) was used as a resin composition forming the middle layer.
These resin compositions were supplied to each hopper of two extruders, heat-melted with the extruders and then extruded using a T-die so as to be turned into a two-species trilayer. Thereafter, pulled out with one pair of matte rolls (outer surface layer side: metal matte roll; inner surface layer side: silicone rubber matte roll), a sheet was solidified by cooling to obtain a 100 µm-layered film, the thicknesses of the outer surface layer and the inner surface layer being 10 µm and the thickness of the middle layer being 80 µm.

### (Film B preparation)

In a similar manner to Film A except that the roll on the inner surface layer side of Film A was a silicone rubber plain roll, a 100 µm-layered film was obtained, the thicknesses of the outer surface layer and the inner surface layer being 10 µm and the thickness of the middle layer being 80 µm.

### (Film C preparation)

In a similar manner to Film A except that the Film A pull-out speed was adjusted, a 70 µm-layered film was obtained, the thicknesses of the outer surface layer and the inner surface layer being 7 µm and the thickness of the middle layer being 56 µm.

### (Film D preparation)

In a similar manner to Film A except that the Film A pull-out speed was adjusted, a 120 µm-layered film was obtained, the thicknesses of the outer surface layer and the inner surface layer being 12 µm and the thickness of the middle layer being 96 µm.

### (Film E preparation)

A resin composition comprising 99% by mass of a low density polyethylene (product name "SUMIKATHENE F218-0" manufactured by Sumitomo Chemical Co., Ltd.) with 1% by mass of a glycerin ester series anti-static agent mixed-into was used as a resin composition forming the outer surface layer and the inner surface layer, and a low density polyethylene (product name "SUMIKATHENE F218-0" manufactured by Sumitomo Chemical Co., Ltd.) was used as a resin composition forming the middle layer.
These resin compositions were supplied to each hopper of two extruders, heat-melted with the extruders and then extruded using a T-die so as to be turned into a two-species trilayer. Thereafter, pulled out with one pair of matte rolls (outer surface layer side: metal matte roll; inner surface layer side: silicone rubber matte roll), a sheet was solidified by cooling to obtain a 100 µm-layered film, the thicknesses of the outer surface layer and the inner surface layer being 10 µm and the thickness of the middle layer being 80 µm.

### (Film F preparation)

100% by mass of a low density polyethylene (product name "SUMIKATHENE F218-0" Sumitomo Chemical Co., Ltd.) was provided to the hopper of an extruder, heat-melted with the extruder and then extruded using a T-die. Thereafter, pulled out with metal mirror surface rolls, a sheet was solidified by cooling to obtain an 80 µm-thick film.

### <Example 1 >

A bag was made using Film A as the front-side film and Film A as the back-side film. Using a bag making machine, two sheets of films in roll form which are each 350 mm-wide were superposed and rolled out such that the respective inner surface layer sides became the inner surface, one edge on one side in the length direction and two edges in the width direction were sealed (heat-fused) with an impulse sealer, and cut it at 220 mm length to form a 350 mm × 220 mm packaging bag having an open portion at one edge.

### <Example 2>

In a similar manner to Example 1 except that Film B was used as the front-side film and Film B was used as the back-side film, a 350 mm × 220 mm packaging bag having an open portion at one edge was formed.

### <Example 3>

In a similar manner to Example 1 except that Film C was used as the front-side film and Film C was used as the back-side film, a 350 mm × 220 mm packaging bag having an open portion at one edge was formed.

### <Example 4>

In a similar manner to Example 1 except that Film F was used as the back-side film, a 350 mm × 220 mm packaging bag having an open portion at one edge was formed.

### <Example 5>

In a similar manner to Example 1 except that Film E was used as the front-side film and Film C was used as the back-side film, a 350 mm × 220 mm packaging bag having an open portion at one edge was formed.

### <Example 6>

In a similar manner to Example 1 except that Film E was used as the front-side film and Film E was used as the back-side film, a 350 mm × 220 mm packaging bag having an open portion at one edge was formed.

### <Example 7>

In a similar manner to Example 1 except that Film E was used as the front-side film and Film F was used as the back-side film, a 350 mm × 220 mm packaging bag having an open portion at one edge was formed.

### <Comparative Example 1>

In a similar manner to Example 1 except that Film F was used as the front-side film, a 350 mm × 220 mm packaging bag having an open portion at one edge was formed.

### <Comparative Example 2>

In a similar manner to Example 1 except that Film F was used as the front-side film and Film D was used as the back-side film, a 350 mm × 220 mm packaging bag having an open portion at one edge was formed.

### <Comparative Example 3>

In a similar manner to Example 1 except that Film F was used as the front-side film and Film F was used as the back-side film, a 350 mm × 220 mm packaging bag having an open portion at one edge was formed.

**[Table 1]**

| | | | Resin composition | | 10-point mean roughness (µm) | Layer thickness (µm) | Sheet thickness (µm) | Stiffness (mN) |
|---|---|---|---|---|---|---|---|---|
| Film A | Two-species trilayer | Outer surface layer | Random copolymerization PP | 99% by mass | 8 | 10 | 100 | 38 |
| | | | Glycerin ester series anti-static agent | 1 % by mass | | | | |
| | | Middle layer | Random copolymerization PP | 100% by mass | - | 80 | | |
| | | Inner surface layer | Same as outer surface layer | | 20 | 10 | | |
| Film B | Two-species trilayer | Outer surface layer | Random copolymerization PP | 99% by mass | 8 | 10 | 100 | 38 |
| | | | Glycerin ester series anti-static agent | 1 % by mass | | | | |
| | | Middle layer | Random copolymerization PP | 100% by mass | - | 80 | | |
| | | Inner surface layer | Same as outer surface layer | | 3 | 10 | | |
| Film C | Two-species trilayer | Outer surface layer | Random copolymerization PP | 99% by mass | 7 | 7 | 70 | 15 |
| | | | Glycerin ester series anti-static agent | 1 % by mass | | | | |
| | | Middle layer | Random copolymerization PP | 100% by mass | - | 56 | | |
| | | Inner surface layer | Same as outer surface layer | | 15 | 7 | | |
| Film D | Two-species trilayer | Outer surface layer | Random copolymerization PP | 99% by mass | 7 | 12 | 120 | 85 |
| | | | Glycerin ester series anti-static agent | 1 % by mass | | | | |
| | | Middle layer | Random copolymerization PP | 100% by mass | - | 96 | | |
| | | Inner surface layer | Same as outer surface layer | | 18 | 12 | | |
| Film E | Two-species trilayer | Outer surface layer | LDPE | 99% by mass | 6 | 10 | 100 | 22 |
| | | | Glycerin ester series anti-static agent | 1 % by mass | | | | |
| | | Middle layer | LDPE | 100% by mass | - | 80 | | |
| | | Inner surface layer | Same as outer surface layer | | 15 | 10 | | |
| Film F | Mono-layer | - | LDPE | 100% by mass | 1.5 | - | 80 | 12 |
| | | - | | | 1.5 | | | |

**[Table 2]**

| | Front-side film | Back-side film | Film stiffness relationship | Dew adhesiveness | Housing workability | Open portion back-folding workability |
|---|---|---|---|---|---|---|
| Example 1 | Film A | Film A | Sf = Sb | ○ | ○ | ○ |
| Example 2 | Film B | Film B | Sf = Sb | ○ | ○ | ○ |
| Example 3 | Film C | Film C | Sf = Sb | ○ | ○ | ○ |
| Example 4 | Film A | Film F | Sf > Sb | ○ | ○ | ○ |
| Example 5 | Film E | Film C | Sf > Sb | ○ | ○ | ○ |
| Example 6 | Film E | Film E | Sf = Sb | ○ | ○ | ○ |
| Example 7 | Film E | Film F | Sf > Sb | ○ | ○ | ○ |
| Comparative Example 1 | Film F | Film A | Sf < Sb | × | × | ○ |
| Comparative Example 2 | Film F | Film D | Sf < Sb | × | × | × |
| Comparative Example 3 | Film F | Film F | Sf = Sb | × | ○ | ○ |

### (Discussion)

As shown in Table 2, the packaging bags of Examples 1 to 7 were excellent in all of dew adhesiveness, housing workability and open portion back-folding workability.
On the other hand, the packaging bag of Comparative Examples 1 to 3, having no irregular surface on the inner surface of the front film portion, all had issues in dew adhesiveness. In addition, those with stiffer back film portion stiffness than the front film portion stiffness had issues in housing workability (Comparative Examples 1 and 2), and in particular, those with a back-side film stiffness stiffer than 80 mN also had issues in open portion back-folding workability when back-folding the back-side film (Comparative Example 2).

### [Description of the Signs]

1: the present anti-static bag, 2: front film portion, 3: back film portion, 4: irregular surface, 5: open portion, 6: back-folding portion, 7: closed portion 10: liquid crystal module, 11: display screen, 12: frame (bezel) 15: tape

## Claims

1. An anti-static packaging bag for liquid crystal module, wherein a bag is constituted from a front film portion and a back film portion and having an open portion and a closed portion, at least the front film portion containing an anti-static agent and at least the inner surface of front film portion that is to be on the inside of the bag being an irregular surface.

2. The anti-static packaging bag for liquid crystal module according to claim 1, wherein the front film portion stiffness Sf and the back film portion stiffness Sb are both 80 mN or lower and satisfy Sf ≧ Sb.

3. The anti-static packaging bag for liquid crystal module according to claim 1 or 2, wherein the main component of the front film portion and the main component of the back film portion are polyolefin series resins polymerized mainly from olefin monomers having the same or different numbers of carbons each, formed into a bag by heat-fusing border ends of the film.

4. The anti-static packaging bag for liquid crystal module according to any of claims 1 to 3, wherein the front film portion is a layered film provided with an outer surface layer, a middle layer and an inner surface layer, the main component of each layer being a polyolefin series resin polymerized mainly from olefin monomers, all having the same number of carbons, containing an anti-static agent in at least the inner surface layer.

5. The anti-static packaging bag for liquid crystal module according to any of claims 1 to 4, wherein the inner surface that is to be on the inside of the bag and the outer surface that is to be on the outside of the bag, of the front film portion, are irregular surfaces.

6. The anti-static packaging bag for liquid crystal module according to any of claims 1 to 5, wherein the main component of the front film portion is a polypropylene series resin.

7. The anti-static packaging bag for liquid crystal module according to any of claims 1 to 6, wherein both or one of the front film portion and the back film portion is provided with a back-folding portion protruding outward from the bag open border.

8. The anti-static packaging bag for liquid crystal module according to any of claims 1 to 7, wherein the back film portion contains an anti-static agent.

9. A liquid crystal module packaging method for packaging a liquid crystal module with the anti-static packaging bag for liquid crystal module according to any of claims 1 to 8, without covering the display screen of the liquid crystal module with a surface-protecting cover material, the packaging being carried out so as to bring face-to-face the display screen of the liquid crystal module and the inner surface of the front film portion of the anti-static packaging bag for liquid crystal module.
